# EUROPÄISCHE PATENTSCHRIFT

(11) **EP 1 695 906 B1**
(45) Veröffentlichungstag und Bekanntmachung des Hinweises auf die Patenterteilung: **21.11.2012**
(21) Anmeldenummer: 06003480.8
(22) Anmeldetag: 21.02.2006
(51) Int. Cl.: B64D 45/00

(54) **Einrichtung zur Bestimmung eines Rotationswinkels einer Welle in einem Luftfahrzeug**
Device for determining a rotation angle of a shaft in an aircraft
Dispositif destiné à la détermination d`un angle de rotation d`un arbre dans un aéronef

(30) Priorität: 23.02.2005 DE 102005008331; 23.02.2005 US 655326 P
(43) Veröffentlichungstag der Anmeldung: 30.08.2006
(73) Patentinhaber: Airbus Operations GmbH, 21129 Hamburg (DE)
(72) Erfinder: Rennhack, Jörn, 21698 Harsefeld (DE)
(74) Vertreter: Dilg, Andreas

(56) Entgegenhaltungen:
- EP-A- 1 462 361
- US-A- 5 367 237
- US-B1- 6 382 566

## Beschreibung

Die vorliegende Erfindung betrifft die Rotationswinkelbestimmung einer Welle in einem Luftfahrzeug. Insbesondere betrifft die vorliegende Erfindung eine Einrichtung zur Bestimmung eines Rotationswinkels einer Welle in einem Luftfahrzeug, ein Luftfahrzeug, umfassend eine entsprechende Einrichtung, die Verwendung einer entsprechenden Einrichtung in einem Luftfahrzeug und ein Verfahren zur Bestimmung eines Rotationswinkels einer Welle in einem Luftfahrzeug.

Das System zum Betreiben einer Brems- oder Landeklappe in einem Flugzeug gehört zu den sicherheitskritischen Systemen innerhalb des Flugzeugs. Heutzutage werden elektromechanische Systeme zum Betreiben der Landeklappen verwendet (Slat und Flaps), welche ggf. redundant ausgeführt sind und sich als hochzuverlässig erwiesen haben. Zum Betreiben der Landeklappen werden im Allgemeinen mechanische Wellensysteme zur Übertragung der Rotationskräfte verwendet. Um zu vermeiden, dass bei den Klappenstellungen Unsymmetrien auftreten und im Fall des Ausfalles eines Antriebsmotors noch die gesamten Klappen verstellen zu können, werden alle Klappen mit einem zentralen Wellenstrang verbunden.

Die Position der Klappen wird über zwei oder sogar vier unabhängige Positionsaufnehmer (Position Pickup Unit, PPU) pro Klappensegment an der Welle (Shaft) gemessen. Diese Sensoren befinden sich jeweils an den Enden der Teilwelle, um Differenzen in den absoluten Positionen der beiden Wellenenden zu detektieren und somit Rückschlüsse auf auftretenden Kräfte zu ziehen. Im Normalzustand sind die Stellmotoren hochsynchronisiert, es wirkt also keine Kraft auf die Welle.

Fällt im Fehlerfall eine der PPU's aus, so wird heute der Motor, der auf dem entsprechenden Wellenende sitzt, abgeschaltet, da keine Position mehr gemessen werden kann und er dann unsynchronisiert wäre. Ggf. würde sich ein sog. "Force Fight" zwischen den beiden Motoren entwickeln und die Welle irgendwann zerstört werden. Andererseits bedeutet dies aber auch, dass eine fehlerfreie und funktionierende Komponente (der Motor) aufgrund eines Fehlers einer anderen Komponente ausgeschaltet und die Verfügbarkeit des Systems somit um 50%reduziert wird. Weiterhin wird die Dynamik und Agilität des Systems um 50 % reduziert, da der übrigbleibende Motor nur noch mit der Hälfte der möglichen Umdrehungszahl läuft. Aus Gründen der Synchronität gilt das dann auch für die andere Flügelseite.

US 6,382,566 B1 betrifft ein Verfahren und eine Vorrichtung zur Detektion einer Asymmetrie einer Flugzeuglandeklappe. Die Vorrichtung umfasst eine Antriebseinheit zum Antrieb von Wellen, welche über verschiedene Transmissionen Kugelumlaufspindelwellen von Landeklappen antreiben. Sensoren, die am Flügel angebracht sind, detektieren die Rotation der Kugelumlaufspindelwellen. Weiterhin ist ein FSAM-Modul vorgesehen, welches das Landeklappenantriebssystem ausschaltet, wenn die Umdrehungszahlen zweier Kugelumlaufspindelwellen sich um eine vorgegebene Anzahl unterscheiden.

EP 1 462 361 A1 betrifft ein Klappensystem am Tragflügel eines Starrflügel-Flugzeuges, welches Antriebe aufweist, die mit einer Klappensteuerungseinheit leitend verbunden sind und durch letztere einzeln ansteuerbar sind.

US 5,367,237 betrifft eine Steuerung für einen elektromechanischen Aktuator, der von einem Motor angetrieben wird. Die Vorrichtung umfasst einen Sensor zum Erzeugen eines Positionssignals bezüglich dem Aktuator, einen Sensor zum Erzeugen eines Ratensignals bezüglich der Motordrehzahl, entsprechende Filter und einen Komparator, um die beiden Signale miteinander zu vergleichen.

Es ist eine Aufgabe der vorliegenden Erfindung eine verbesserte Rotationswinkelbestimmung in einem Luftfahrzeug anzugeben.

Gemäß einem Ausführungsbeispiel der vorliegenden Erfindung wird die obige Aufgabe mittels einer Einrichtung zur Bestimmung eines Rotationswinkels einer Welle in einem Luftfahrzeug gelöst, die Einrichtung umfassend eine Welle und einen Motor, wobei der Motor zur Rotation der Welle ausgeführt ist und wobei der Motor weiterhin zur Detektion von ersten Rotationsdaten, welche mit einem Rotationswinkel eines ersten Wellenbereichs der Welle korrespondieren, ausgeführt ist.

Durch die Messung der Rotationsdaten oder Rotationswinkel durch einen Antriebsmotor ist eine einfache und automatische Rotationswinkelbestimmung gewährleistet, ohne zusätzliche Detektionseinrichtungen vorsehen zu müssen. Dies wird durch den Einbau von Antriebsmotoren gewährleistet, welche ihre aktuellen Positionen intern und hochpräzise automatisch bei Betrieb messen.

Gemäß einem weiteren Ausführungsbeispiel der vorliegenden Erfindung umfasst die Einrichtung weiterhin eine Positionsaufnahmeeinheit, welche zur Detektion von zweiten Rotationsdaten ausgeführt ist, die mit einem Rotationswinkel eines zweiten Wellenbereichs der Welle korrespondieren.

Vorteilhafterweise wird somit ein redundantes System bereitgestellt, welches auch dann Rotationsdaten misst, wenn beispielsweise eine oder sämtliche Positionsaufnahmeeinheiten ausfallen sollten, da in diesem Fall dann immer noch der Antriebsmotor zur Rotationsdatenmessung bereitsteht. Dies führt zu einer signifikanten Erhöhung der Verfügbarkeit des Lande- oder Bremsklappensystems. Selbst bei Ausfall aller PPU's ist das Abschalten der Motoren nicht notwendig.

Gemäß einem weiteren Ausführungsbeispiel der vorliegenden Erfindung umfasst die Einrichtung weiterhin eine Steuerungseinheit, wobei der Motor zur Übermittlung der ersten Rotationsdaten an die Steuerungseinheit ausgeführt ist und wobei die Steuerungseinheit zur Steuerung oder Regelung der Rotationsdaten der Welle auf Basis der übermittelten ersten Rotationsdaten ausgeführt ist.

Gemäß diesem Ausführungsbeispiel der vorliegenden Erfindung kann beispielsweise der Motor die von ihm gemessenen Rotationswinkel des ersten Wellenbereichs über einen Datenbus oder eine drahtlose Verbindung oder dergleichen an die Steuerungseinheit, welche beispielsweise im Rumpf des Flugzeuges angebracht ist, übermitteln. Somit ist gewährleistet, dass die bordinterne Steuerungseinheit stets mit den aktuellen Rotationsdaten des ersten Wellenbereichs versorgt ist.

Gemäß einem weiteren Ausführungsbeispiel der vorliegenden Erfindung ist die Positionsaufnahmeeinheit zur Übermittlung der zweiten Rotationsdaten an die Steuerungseinheit ausgeführt, wobei die Steuerungseinheit zur Steuerung oder Regelung der Rotation der Welle auf Basis der übermittelten ersten und zweiten Rotationsdaten ausgeführt ist.

Vorteilhaft ermöglicht dies, dass der zentralen Steuerungseinheit stets Daten übermittelt werden, welche den Rotationswinkel des ersten Wellenbereichs und den Rotationswinkel des zweiten Wellenbereichs repräsentieren. Der Steuerungseinheit stehen so zu jedem Zeitpunkt ausreichend Informationen hinsichtlich den aktuellen Positionen der beiden Wellenbereiche zur Verfügung. Durch die redundante Ausführung der Rotationsdatenmesseinrichtungen ist eine hohe Systemsicherheit gewährleistet.

Gemäß einem weiteren Ausführungsbeispiel der vorliegenden Erfindung umfasst die Einrichtung weiterhin eine Synchronisationseinheit, welche zur Synchronisation der ersten Rotationsdaten mit den zweiten Rotationsdaten ausgeführt ist.

Beispielsweise kann somit sichergestellt werden, dass die Nullpunkte (also die Positionen der ersten und zweiten Wellenbereiche, an denen noch keine Rotation der Wellenbereiche stattgefunden hat) der Positionsaufnahmeeinheit und des Motors miteinander übereinstimmen. Beispielsweise kann während des Fluges eine Eichung der Motoren auf Basis der von der Positionsaufnahmeeinheit gelieferten Daten erfolgen.

Gemäß einem weiteren Ausführungsbeispiel der vorliegenden Erfindung ist die Welle zur Betätigung einer Einrichtung, ausgewählt aus der Gruppe bestehend aus Bremsklappe, Landeklappe, Seitenruder, Querruder und Höhenruder ausgeführt.

Gemäß diesem Ausführungsbeispiel können aktuelle Positionen der Ruder oder Klappen des Flugzeugs redundant und auf verschiedene Weise (einmal über die Motorsteuerung und zum anderen über die entsprechenden Positionsaufnahmeeinheiten) bestimmt werden. Somit ist eine erhöhte Systemsicherheit oder -verfügbarkeit der Ruder- oder Klappensysteme gewährleistet.

Gemäß einem weiteren Ausführungsbeispiel der vorliegenden Erfindung ist die Steuerungseinheit zur Steuerung oder Regelung der Rotationsdaten der Welle lediglich auf Basis der übermittelten ersten Rotationsdaten ausgeführt, wenn die übermittelten zweiten Rotationsdaten fehlerhaft oder unvollständig sind.

Somit ist eine erhöhte Systemverfügbarkeit dahingehend gewährleistet, dass bei Ausfall aller PPU's es nicht notwendig ist, die Motoren abzuschalten, da immer noch ausreichend Rotationsdaten der Welle vorliegen.

Gemäß einem weiteren Ausführungsbeispiel der vorliegenden Erfindung ist die Steuerungseinheit zur Steuerung oder Regelung der Rotation der Welle auf Basis der übermittelten ersten und zweiten Rotationsdaten ausgeführt, selbst wenn die übermittelten zweiten Rotationsdaten fehlerhaft oder unvollständig sind.

Vorteilhafterweise können beispielsweise, gemäß diesem Ausführungsbeispiel, fehlerhafte oder unvollständige Rotationsdaten der Positionsaufnahmeeinheit auf Grundlage der gelieferten Rotationsdaten des Motors ergänzt werden, so dass letztendlich wieder ein vollständiger Datensatz zur Verfügung steht.

Gemäß einem weiteren Ausführungsbeispiel der vorliegenden Erfindung wird ein Verfahren zur Bestimmung eines Rotationswinkels einer Welle in einem Luftfahrzeug angegeben. Die Welle wird durch einen Motor rotiert und erste Rotationsdaten, welche mit dem Rotationswinkel eines ersten Wellenbereichs der Welle korrespondieren, werden durch den Motor detektiert.

Gemäß dieses Ausführungsbeispiels der vorliegenden Erfindung wird ein einfaches und schnelles Verfahren angegeben, bei dem Rotationsdaten der Welle über ihr Antriebsmittel automatisch detektiert werden, ohne dass zusätzliche Detektionseinrichtungen vorgesehen werden müssen. Dies kann zu einer Kosten- und Gewichtseinsparung führen, aber auch zu einer erhöhten Redundanz und somit Systemverfügbarkeit.

Weitere Ausführungsbeispiele und Vorteile der vorliegenden Erfindung ergeben sich aus den Unteransprüchen und den nebengeordneten Ansprüchen.

Im Folgenden werden mit Verweis auf die Figuren bevorzugte Ausführungsbeispiele der vorliegenden Erfindung beschrieben.

**Fig. 1** zeigt eine schematische perspektivische Darstellung eines Luftfahrzeugs mit einer Einrichtung gemäß einem Ausführungsbeispiel der vorliegenden Erfindung.

Fig. 2 zeigt eine schematische perspektivische Darstellung einer Einrichtung zur Bestimmung eines Rotationswinkels gemäß einem Ausführungsbeispiel der vorliegenden Erfindung.

Fig. 3 zeigt eine schematische perspektivische Detaildarstellung der Einrichtung in Fig. 2.

Fig. 4 zeigt eine schematische Querschnittsdarstellung einer Welle zur Bedienung einer Bremsklappe in einem Flugzeug.

In der folgenden Figurenbeschreibung werden für gleiche oder ähnliche Elemente die gleichen Bezugsziffern verwendet.

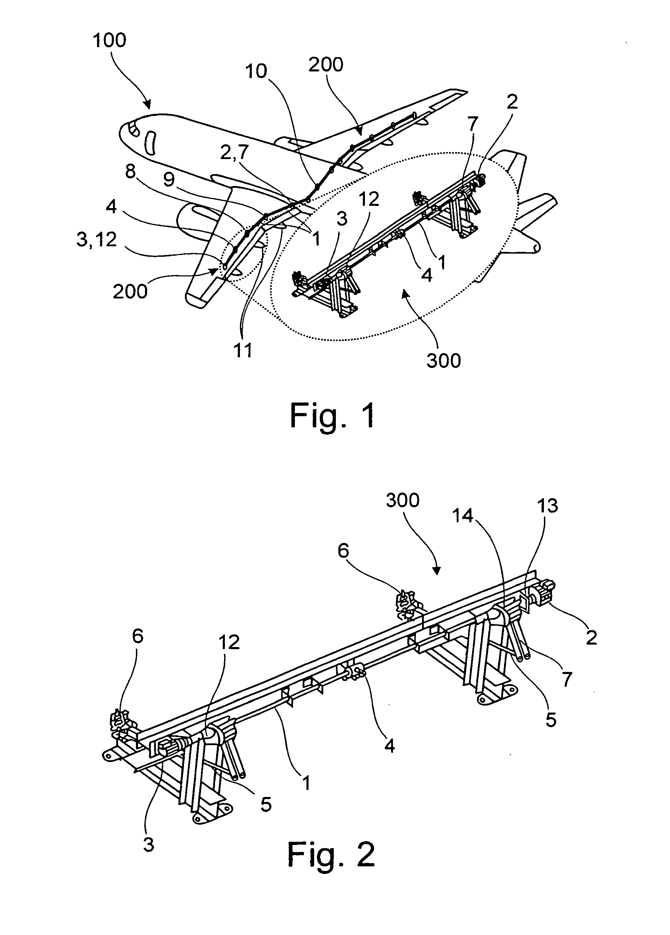

Fig. 1 zeigt eine schematische perspektivische Darstellung eines Luftfahrzeuges mit einer Einrichtung gemäß einem Ausführungsbeispiel der vorliegenden Erfindung. Wie Fig. 1 zu entnehmen ist, weist das Flugzeug 100 in seinen Tragflächen jeweils eine erfindungsgemäße Einrichtung 200 auf, welche beispielsweise zur Bedienung der Brems- oder Landeklappen oder aber auch der Querruder oder dergleichen vorgesehen ist.

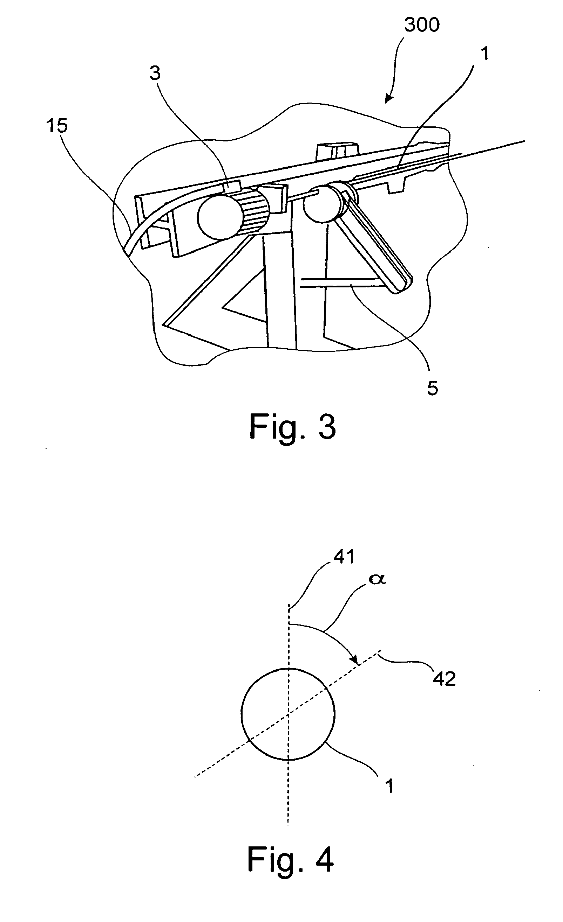

Die Einrichtung 200 ist auch innerhalb eines Simulationsaufbaus (ausgebaut aus dem Flugzeug) 300 dargestellt, welcher in Fig. 2 und in Fig. 3 detaillierter abgebildet ist.

Die Einrichtung 200 weist eine Welle 1, zwei Motoren 2, 3 und eine Bremse 4 auf. Weiterhin sind Rotations-Aktuatoren 7, 8, 9, 12 vorgesehen, welche, wie auch die Motoren 2, 3, eine Bestimmung von Rotationsdaten der entsprechenden Wellenabschnitte ermöglichen.

Die Messdaten, welche von Motoren 2, 3 und Aktuatoren 7, 8, 9, 12 aufgenommen werden, werden über entsprechende Datenleitungen (nicht dargestellt in Fig. 1) an eine zentrale Leistungssteuerungseinheit (Power Control Unit, PCU) 10 geliefert. Dort können die Daten ausgewertet werden und es können entsprechende Steuer- oder Regelsignale an die Klappen-oder Rudermotoren abgegeben werden.

Fig. 2 zeigt eine schematische perspektivische Darstellung einer Einrichtung zur Bestimmung eines Rotationswinkels gemäß einem Ausführungsbeispiel der vorliegenden Erfindung. Die in Fig. 2 dargestellte Einrichtung, welche beispielsweise in einen Flugzeugflügel integrierbar ist, ist im Fall der Fig. 2 in einen Simulationsaufbau 300 eingebaut. Die Einrichtung umfasst eine Welle 1, Motoren 2 und 3, eine Systembremse 4, einen Last-Simulationszylinder 5 und Servos 6 zur Simulation eines Klappenwiderstandes, Aktuatoren oder Positionsaufnahmeeinheiten 7, 12 und einen ersten Wellenbereich 13 und einen zweiten Wellenbereich 14.

Die Welle 1 wird über die beiden Motoren 2, 3 an ihren Endbereichen rotiert, um die Klappen oder Ruder zu bedienen, welche über die Zylinder 5 und Servos 6 simuliert werden. Die Rotationsmittel der entsprechenden Wellenbereiche werden hierbei über die Aktuatoren 7 und 12 gemessen und die entsprechenden Messdaten an die zentrale Steuerungseinheit 10 (s. Fig. 1) übermittelt. Weiterhin werden Rotationsdaten der Wellenbereiche in der Nähe der Motoren 2, 3 direkt von den Motoren (während ihres Betriebs) detektiert und ebenfalls an die zentrale Steuerungseinheit 10 übermittelt.

Die verwendeten Motoren zur Verstellung der Klappen messen die eingestellten Positionen intern hochpräzise, sehr viel präziser als die heute verfügbaren PPU's 7, 12. Die Messung der Positions- oder Rotationsdaten erfolgt hierbei beispielsweise absolut und nicht inkrementell. Über entsprechende Datenleitungen werden diese Positionsdaten dann an die Steuerungseinheit 10 weitergereicht und verbleiben nicht (wie bisher) innerhalb der Motoreinheiten.

Werden die PPU-Daten und die Motorpositionsdaten an die Steuerungseinheit 10 geliefert, können, beispielsweise gemäß einem Ausführungsbeispiel der vorliegenden Erfindung, die Motorpositionsdaten entsprechend umgerechnet werden. Dies kann beispielsweise im Anschluss an eine Eichung erfolgen, welche den Nullpunkt des Motors auf Basis der von den Positionsaufnahmeeinheiten 7, 12 gelieferten Rotationsdaten festlegt.

Somit sind die von den Motoren 2,3 gemessenen Rotationsdaten direkt mit den PPU-Daten vergleichbar und bei einem Ausfall oder Fehler einer PPU muss erfindungsgemäß der entsprechende Motor nicht mehr abgeschaltet werden, da ja noch Positionsdaten bei dem entsprechenden Motor verfügbar sind.

Weiterhin können vorteilhafterweise Positionsdaten einer PPU, die nur leicht fehlerhafte Daten liefert (Bithänger) nun detektiert werden und entsprechend ausgewertet bzw. weiterverwendet werden, was vorher nicht möglich war.

Gemäß einem Ausführungsbeispiel der vorliegenden Erfindung werden die Motorpositionsdaten zusammen mit den Daten der Positionsaufnahmeeinheiten 7, 12 an die Steuerungseinheit 10 übermittelt und ab und zu mit den Positionsaufnahmeeinheitsdaten synchronisiert. Somit können evtl. auftretende Motordriften herausgerechnet werden.

Fällt beispielsweise eine der PPU's 7, 12 aus, sind weiterhin die Rotationsdaten oder Positionsdaten des entsprechenden Antriebsmotors 3, 2 erhältlich, so dass weiterhin stichhaltige Aussagen über die Position des entsprechenden Wellenbereichs und somit über eine evtl. Kraftwirkung auf die Welle getroffen werden können und der Motor nicht abgeschaltet werden muss.

Gemäß einem Ausführungsbeispiel der vorliegenden Erfindung können die von den Motoren gemessenen Rotationsdaten dazu verwendet werden, fehlerhaft oder unvollständig übermittelte Rotationsdaten der Positionsaufnahmeeinheiten 7, 12 zu reparieren oder zu ergänzen. Dies erfolgt beispielsweise innerhalb der Steuerungseinheit 10. Selbst bei Ausfall aller Positionsaufnahmeeinheiten 7, 12 ist immer noch ein sicherer Betrieb der Klappen- oder Ruderanlagen gewährleistet, da noch immer ausreichend Rotationsdaten bezüglich der entsprechenden Wellen 1 vorliegen.

Fig. 3 zeigt eine schematische perspektivische Detaildarstellung der Einrichtung aus Fig. 2. Wie in Fig. 3 zu erkennen, ist der Antriebsmotor 2 am Ende der Welle 1 angeordnet, um die Welle 1 zu rotieren. Lastzylinder 5 dient zur Simulation der auf die Klappen oder Ruder einwirkenden Kräfte, welche beispielsweise durch den Luftwiderstand verursacht sind.

Über Daten- und Versorgungsleitung 15 können beispielsweise von dem Motor 2 gemessene Rotationsdaten an die Steuerungseinheit 10 der Fig. 1 übermittelt werden. Natürlich kann diese Datenübertragung auch über zusätzliche Datenleitungen oder kabellos erfolgen.

Fig. 4 zeigt eine schematische Querschnittsdarstellung einer Welle zur Bedienung einer Bremsklappe. Wie in Fig. 4 zu erkennen, weist die Welle 1 eine Ruheposition 41 auf, welche beispielsweise einer eingeklappten Position entspricht. In dieser Position kann z. B. der Motor 2 mit den durch die Positionsaufnahmeeinheit 12 gemessenen Rotationsdaten synchronisiert werden. Durch Betätigung des Motors 2 rotiert dann die Welle 1 um einen Winkel α in eine Position 42. Dieser Rotationswinkel α kann erfindungsgemäß sowohl durch den Motor 2 als auch durch die Positionsaufnahmeeinheit 12 detektiert werden. Vorteilhaft hierfür ist es beispielweise, wenn Motor 3 und Positionsaufnahmeeinheit 12 benachbart zueinander an der Welle angebracht sind, damit sie den gleichen Wellenbereich überwachen. Dies ist aber nicht zwingend erforderlich. Vielmehr können entsprechende Eichungen vorgenommen werden, z.B. bei definierten Bedingungen, so dass eine Zuordnung der Motormessdaten zu den Positionsaufnahmeeinheitsdaten z. B. in der Steuerungseinheit 10 vorgenommen werden kann.

## Patentansprüche

1. Einrichtung zur Bestimmung eines Rotationswinkels einer Welle in einem Luftfahrzeug, die Einrichtung umfassend:
eine Welle (1), welche ausgebildet ist, um damit eine Einrichtung aus der Gruppe bestehend aus Bremsklappe, Landeklappe, Seitenruder, Querruder und Höhenruder zu betätigen;
einen Motor (2);
wobei der Motor (2) zur Rotation der Welle (1) ausgeführt ist;
eine Positionsaufnahmeeinheit (7); und
und eine Synchronisationseinheit;
wobei der Motor (2) weiterhin zur absoluten Detektion von ersten Rotationsdaten ausgeführt ist, welche mit einem ersten Rotationswinkel eines ersten Wellenbereichs (13) der Welle (1) korrespondieren,
wobei die Positionsaufnahmeeinheit (7) zur Detektion von zweiten Rotationsdaten ausgeführt ist, welche mit einem zweiten Rotationswinkel eines zweiten Wellenbereichs (14) der Welle (1) korrespondieren, und
wobei die Synchronisationseinheit dazu ausgeführt ist, in einer Ruheposition der Welle (1) einen Nullpunkt des Motors (2) auf Basis der zweiten Rotationsdaten festzulegen.

2. Einrichtung nach Anspruch 1, weiterhin umfassend:
eine Steuerungseinheit (10);
wobei der Motor (2) zur Übermittlung der ersten Rotationsdaten an die Steuerungseinheit (10) ausgeführt ist;
wobei die Steuerungseinheit (10) zur Steuerung oder Regelung der Rotation der Welle (1) auf Basis der übermittelten ersten Rotationsdaten ausgeführt ist.

3. Einrichtung nach Anspruch 2, weiterhin umfassend:
eine Steuerungseinheit (10);
wobei der Motor (2) zur Übermittlung der ersten Rotationsdaten an die Steuerungseinheit (10) ausgeführt ist;
wobei die Positionsaufnahmeeinheit zur Übermittlung der zweiten Rotationsdaten an die Steuerungseinheit (10) ausgeführt ist;
wobei die Steuerungseinheit (10) zur Steuerung oder Regelung der Rotation der Welle (1) auf Basis der übermittelten ersten und zweiten Rotationsdaten ausgerührt ist.

4. Einrichtung nach Anspruch 3,
wobei die Steuerungseinheit (10) zur Steuerung oder Regelung der Rotation der Welle (1) lediglich auf Basis der übermittelten ersten Rotationsdaten ausgeführt ist, wenn die übermittelten zweiten Rotationsdaten fehlerhaft oder unvollständig sind.

5. Einrichtung nach einem der Ansprüche 3 oder 4,
wobei die Steuerungseinheit (10) zur Steuerung oder Regelung der Rotation der Welle (1) auf Basis der übermittelten ersten und zweiten Rotationsdaten ausgeführt ist, selbst wenn die übermittelten zweiten Rotationsdaten fehlerhaft oder unvollständig sind.

6. Verfahren zur Bestimmung eines Rotationswinkels einer Welle in einem Luftfahrzeug, umfassend die folgenden Schritte:
Rotation der Welle (1) durch einen Motor (2);
Detektion von ersten Rotationsdaten durch den Motor (2) in absoluter Art und Weise, welche mit einem ersten Rotationswinkel eines ersten Wellenbereichs (13) der Welle (1) korrespondieren;
Detektion von zweiten Rotationsdaten durch eine Positionsaufnahmeeinheit (7), welche mit einem zweiten Rotationswinkel eines zweiten Wellenbereichs (14) der Welle (1) korrespondieren; und
Festlegen einen Nullpunkt des Motors (2) auf Basis der zweiten Rotationsdaten in einer Ruheposition der Welle (1).

7. Verfahren nach Anspruch 6, weiterhin umfassend die folgenden Schritte:
Übermittlung der ersten Rotationsdaten von dem Motor (2) an eine Steuerungseinheit;
Übermittlung der zweiten Rotationsdaten von der Positionsaufnahmeeinheit (7) an die Steuerungseinheit;
Steuerung oder Regelung der Rotation der Welle (1) auf Basis der übermittelten ersten und zweiten Rotationsdaten durch die Steuerungseinheit.

## Claims

1. A device for determining the rotation angle of a shaft in an aircraft, the device comprising:
a shaft (1), designed for operating a device, selected from the group comprising brake flap, landing flap or landing slat, side rudder, aileron rudder and elevator rudder;
a motor (2);
wherein the motor (2) is designed to rotate the shaft (1);
a position pickup unit (7); and
a synchronisation unit;
wherein the motor (2) furthermore is designed for absolutely detecting of first rotation data that corresponds to a first rotation angle of a first shaft region (13) of the shaft (1);
wherein the position pickup unit (7) is designed for detecting second rotation data that corresponds to a second rotation angle of a second shaft region (14) of the shaft (1); and
wherein the synchronisation unit is designed for setting a zero point of the motor (2) in a rest position of the shaft (1) based on the second rotation data.

2. The device of claim 1, further comprising:
a control unit (10);
wherein the motor (2) is designed to transmit the first rotation data to the control unit (10);
wherein the control unit (10) is designed to control or regulate the rotation of the shaft (1) on the basis of the transmitted first rotation data.

3. The device of claim 2, further comprising:
a control unit (10);
wherein the motor (2) is designed to transmit the first rotation data to the control unit (10);
wherein the position pickup unit is designed to transmit the second rotation data to the control unit (10);
wherein the control unit (10) is designed to control or regulate the rotation of the shaft (1) on the basis of the transmitted first and second rotation data.

4. The device of claim 3,
wherein the control unit (10) is designed for controlling or regulating the rotation of the shaft (1) only on the basis of the transmitted first rotation data when the transmitted second rotation data is faulty or incomplete.

5. The device of claim 3 or 4,
wherein the control unit (10) is designed for controlling or regulating the rotation of the shaft (1) on the basis of the transmitted first and second rotation data, even if the transmitted second rotation data is faulty or incomplete.

6. A method for determining the rotation angle of a shaft in an aircraft, comprising the following steps:
rotation of the shaft (1) by a motor (2);
detection, in an absolute manner, of first rotation data that corresponds to a first rotation angle of a first shaft region (13) of the shaft (1), by the motor (2).
detection of second rotation data that corresponds to a second rotation angle of a second shaft region (14) of the shaft (1), by a position pickup unit (7); and
setting a zero point of the motor (2) in a rest position of the shaft (1) based on the second rotation data.

7. The method of claim 6, further comprising the following steps:
transmission of the first rotation data from the motor (2) to a control unit;
transmission of the second rotation data from the position pickup unit (7) to the control unit;
control or regulation of the rotation of the shaft (1) on the basis of the transmitted first and second rotation data by the control unit.

## Revendications

1. Dispositif destiné à la détermination d'un angle de rotation d'un arbre dans un aéronef, le dispositif comprenant :
un arbre (1), qui est formé pour actionner un dispositif du groupe constitué d'un aérofrein, d'un volet d'atterrissage, d'un gouvernail de direction, d'un aileron et d'un gouvernail de profondeur ;
un moteur (2) ;
le moteur (2) étant configuré pour la rotation de l'arbre (1) ;
une unité d'enregistrement de position (7) ; et
une unité de synchronisation ;
le moteur (2) étant en outre configuré pour la détection absolue de premières données de rotation qui correspondent à un premier angle de rotation d'un premier segment d'arbre (13) de l'arbre (1),
l'unité d'enregistrement de position (7) étant configurée pour la détection de secondes données de rotation qui correspondent à un second angle de rotation d'un second segment d'arbre (14) de l'arbre (1), et
l'unité de synchronisation étant configurée pour définir dans une position de repos de l'arbre (1) un point zéro du moteur (2) sur la base des secondes données de rotation.

2. Dispositif selon la revendication 1, comprenant en outre :
une unité de commande (10) ;
le moteur (2) étant configuré pour la transmission des premières données de rotation à l'unité de commande (10) ;
l'unité de commande (10) étant configurée pour la commande ou la régulation de la rotation de l'arbre (1) sur la base des premières données de rotation transmises.

3. Dispositif selon la revendication 2, comprenant en outre:
une unité de commande (10) ;
le moteur (2) étant configuré pour la transmission des premières données de rotation à l'unité de commande (10) ;
l'unité d'enregistrement de position étant configurée pour la transmission des secondes données de rotation à l'unité de commande (10) ;
l'unité de commande (10) étant configurée pour la commande ou la régulation de la rotation de l'arbre (1) sur la base des premières et secondes données de rotation transmises.

4. Dispositif selon la revendication 3, l'unité de commande (10) étant configurée pour la commande ou la régulation de la rotation de l'arbre (1) seulement sur la base des premières données de rotation transmises si les secondes données de rotation transmises sont erronées ou incomplètes.

5. Dispositif selon l'une des revendications 3 ou 4, l'unité de commande (10) étant configurée pour la commande ou la régulation de la rotation de l'arbre (1) sur la base des premières et secondes données de rotation transmises même si les secondes données de rotation transmises sont erronées ou incomplètes.

6. Procédé destiné à la détermination d'un angle de rotation d'un arbre dans un aéronef, comprenant les étapes suivantes :
rotation de l'arbre (1) par un moteur (2) ;
détection de premières données de rotation par le moteur (2) de manière absolue qui correspondent à un premier angle de rotation d'une premier segment d'arbre (13) de l'arbre (1) ;
détection de secondes données de rotation par une unité d'enregistrement de position (7) qui correspondent à un second angle de rotation d'un second segment d'arbre (14) de l'arbre (1) ; et
définition d'un point zéro du moteur (2) sur la base des secondes données de rotation dans une position de repos de l'arbre (1).

7. Procédé selon la revendication 6, comprenant en outre les étapes suivantes :
transmission des premières données de rotation du moteur (2) à une unité de commande ;
transmission des secondes données de l'unité d'enregistrement de position (7) à l'unité de commande ;
commande ou régulation de la rotation de l'arbre (1) sur la base des premières et
secondes données par l'unité de commande.
